# EUROPEAN PATENT SPECIFICATION

(11) **EP 1 314 540 B1**
(45) Date of publication and mention of the grant of the patent: **13.10.2004**
(21) Application number: 01954339.6
(22) Date of filing: 26.07.2001
(51) Int. Cl.: B29C 67/00

(54) **PROCESS FOR PRODUCING COLORED SHAPED ARTICLES FROM CURABLE RESIN, AND SHAPING APPARATUS**
VERFAHREN ZUR HERSTELLUNG GEFÄRBTER FORMGEGENSTÄNDE AUS HÄRTBAREM HARZ, UND VORRICHTUNG ZUR FORMGEBUNG
PROCEDE DE PRODUCTION D'ARTICLES COLORES DE RESINE DURCISSABLE, ET APPAREIL DE FORMAGE

(30) Priority: 28.07.2000 JP 2000229191
(43) Date of publication of application: 28.05.2003
(73) Proprietor: NTT Data Corporation, Tokyo 135-6033 (JP); Riken, Wako-shi, Saitama 351-0198 (JP)
(72) Inventor: WATANABE, Katsuyuki, c/o NTT Data Corporation, Tokyo 135-6033 (JP); NAKAJIMA, Koji, c/o NTT Data Corporation, Tokyo 135-6033 (JP); YAMAZAWA, Kenji, c/o Riken, Wako-shi, Saitama 351-0198 (JP); ANZAI, Masahiro, c/o Riken, Wako-shi, Saitama 351-0198 (JP); KASE, Kiwamu, c/o Riken, Wako-shi, Saitama 351-0198 (JP)
(74) Representative: Hoffmann, Eckart, Dipl.-Ing.
(86) International application number: PCT/JP2001/006422
(87) International publication number: WO 2002/009928

(56) References cited:
- EP-A- 0 833 205
- EP-B1- 0 535 984
- WO-A-00/07071
- WO-A-01/33510
- WO-A-95/01257
- WO-A-97/09168
- JP-A- 5 212 804
- JP-A- 5 286 040
- JP-A- 2001 018 297
- US-A- 5 059 266
- US-A- 5 096 530
- US-A- 5 340 433
- US-A- 5 594 652
- P TILLON N ET AL: "COLOR STEREOPHOTOLITHOGRAPHY: A METHOD OF 3-D COLOR IMAGING" JOURNAL OF IMAGING SCIENCE AND TECHNOLOGY, SOC. FOR IMAGING SCIENCE AND TECHNOLOGY, SPRINGFIELD, VA, US, vol. 40, no. 1, 1996, pages 42-49, XP000581057 ISSN: 1062-3701

## Description

### Field of the Invention

The present invention relates to a process and apparatus for producing a colored shaped article from curable resin.

### Description of the Related Art

Coloration of a shaped article produced by a photo-model creation method, that is, by lamination and shaping using laser beam irradiation of a photo-curable resin is greatly limited to the color (usually, a semitransparent color) of the resin itself. For. this reason, a method has been used by which a colorant was added to the produced shaped article upon completion of a series of lamination and shaping operations.

However, with the above-mentioned conventional coloration method, large-scale equipment is required to add a colorant to the shaped article. Another problem is that when the object of coloration has a complex shape and multicolor addition is conducted which uses a plurality of colorants, the addition operation itself is difficult to implement with the conventional equipment and there are portions that cannot be colored because of the complex shape of the article.

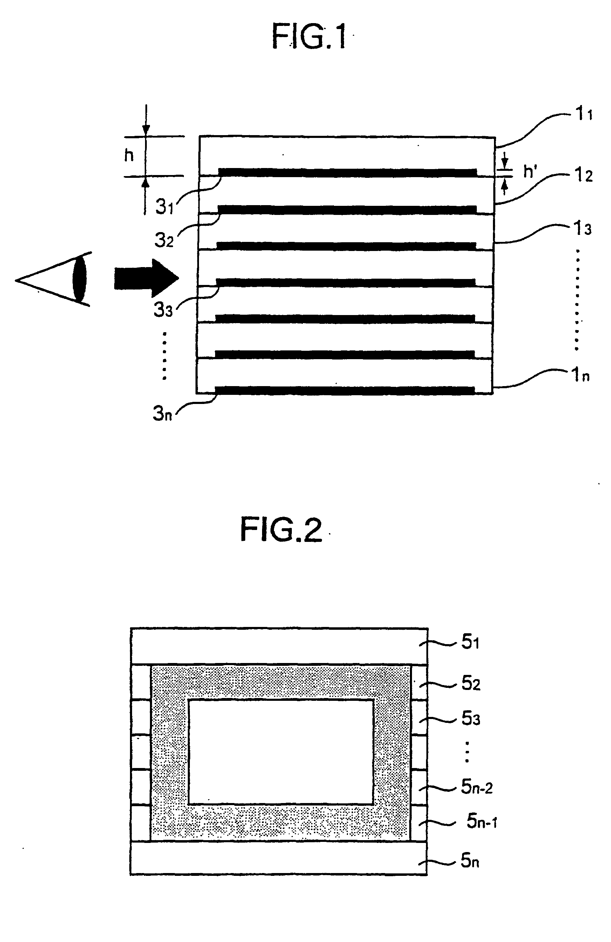

Accordingly, with the foregoing in view, a method has been attempted by which a colorant is added on the upper surface of the respective layer each time a layer is formed by the above-mentioned photo-model creation method, that is, a method for curing a photo-curable resin by laser beam irradiation. In the shaped article having a colorant added thereto by this method, as shown in FIG. 1, the thickness h' of coating layers 3₁ to 3ₙ formed from a colorant is much less than the thickness h of layers 1₁ to 1ₙ formed from the photo-curable resin, but when the shaped article is viewed from the upper surface, the color of the colorant appears as a color of the shaped article.

However, when the shaped article is viewed from the side surface, since the thickness h' of the coating layers 3₁ to 3ₙ is very small, as mentioned above, the color (usually a semitransparent color) of the resin itself, rather than the color of the colorant, appears as the color of the shaped article. The resulting problem is that a reliable coloration effect cannot be obtained and, therefore, the above-described colorant addition method cannot be considered effective.

US-A-5,340,443 discloses a method and apparatus for producing articles of arbitrary shape by alternately and successively forming a layer of curable resin and then irradiating the layer with laser light to cure the resin and shape the layer. Because each layer can have an individual shape, the shape of the article as a whole is arbitrary. Regarding colors, this document does disclose using a colored material as the resin and also discloses forming a layer of differently colored resins to obtain multicolor layers. In all cases the color is apparently added to the resin before the resin is dispensed to provide a layer of the liquid resin that is subsequently cured by exposure to a respective radiation.

US-A-5,594,652 discloses a method and apparatus for the computer-controlled manufacture of three-dimensional objects from computer data, in which a first material is dispensed in liquid form at selected locations of a target surface, and the selected locations correspond to the shell locations of a cross-section of an object. The first material solidifies after being dispensed; a second material is applied at locations of said target surface other than the shell locations at which the first material is dispensed, to form another target surface. The dispensing and applying is repeated to form an object comprising a shell of the first material surrounding said second material, and surrounded by the second material. The portion of said second material surrounding said shell is removed, relative to the first material, to leave an object formed of a shell of the first material surrounding a portion of the second material. The material used in this prior art is not a curable resin but a water soluble material solid at room temperature and liquid at elevated temperatures. Different kinds and colors of materials may be used and applied by a respective one of plural dispensers.

US-A-5,059,266 discloses an apparatus and a method for forming a three-dimensional article with photosetting or thermosetting material on the basis of a three-dimensional information on the article by means of an ink jet method. The material is jetted from at least one ink jet head to a stage and laminated thereon. The laminated material is exposed to light by a light source to be cured. In this process, a jetting direction of the material from the ink jet head to the stage and/or a jetting amount of the material jetted from the ink jet head is changed in accordance with the information by a control unit, thereby forming a solid article having a desired three-dimensional shape. A multi-color three-dimensional article may be formed by plural curable materials of different kinds or colors taken from plural tanks for accommodating the different kinds or colors of materials.

### SUMMARY OF THE INVENTION

Accordingly, it is an object of the present invention is to provide a method and apparatus that allow an effective and reliable coloration of a shaped article composed of a curable resin, not only in case of a single-color addition coloration employing a single colorant, but also in case of multicolor coloration using a plurality of colorants.

Another object of the present invention is to is to provide such method and apparatus that do not require a large-scale equipment.

These objects are achieved by a process as claimed in claim 1 and an apparatus as claimed in claim 4. Preferred embodiments of the invention are subject-matter of the dependent claims.

In accordance with the teachings of the present invention, since the colored region is formed so that the color of the colorant can be recognized from all directions of the completed colored shaped article, a reliable coloration effect can be obtained.

### BRIEF DESCRIPTION OF THE DRAWINGS

- FIG. 1: is a cross-sectional view of an article composed of a photo-curable resin colored by the conventional colorant addition method;
- FIG. 2: is a cross-sectional view illustrating an example of the article composed of a photocurable resin relating to an embodiment of the present invention;
- FIG. 3: is a perspective view of a colored layer composed of a photo-curable resin, which is included in the article shown in FIG. 2;
- FIG. 4: is a perspective view of a colored layer composed of a photo-curable resin of a type different from that in FIG. 3, which is also included in the article shown in FIG. 2;
- FIG. 5: illustrates an example of a method for forming the colored layer shown in FIG. 3;
- FIG. 6: illustrates a modification of the formation method shown in FIG. 5;
- FIG. 7: illustrates an example of a method for coloring a layer composed of a photo-curable resin, while suppressing the build-up of the colorant (color ink);
- FIG. 8: illustrates another example of the coloration method shown in FIG. 7;
- FIG. 9: illustrates still another example of the coloration method shown in FIG. 7 and compares the results obtained by the coloration methods shown in FIG. 7 and FIG. 8;
- FIG. 10: illustrates an example of the method for coloration of layers in the colored shaped article composed of a photo-curable resin based on the method shown in FIG. 7, in a state in which the coloration regions are averaged over the entire shaped article ; and
- FIG. 11: illustrates an example of the method for multicolor addition to a layer composed of a photo-curable resin, without the reduction in size of the colored region.

### DESCRIPTION OF THE PREFERRED EMBODIMENTS

The embodiments of the present invention will be described in detail below with reference to the appended figures.

FIG. 2 is a cross-sectional view illustrating an example of the colored shaped article composed of photo-curable resin relating to an embodiment of the present invention. In the following the term "resin" means "photo-curable resin" and the term "article" means "colored shaped article" unless stated otherwise.

The article has a structure obtained by lamination and shaping of a resin. The shape of the entire article is not limited to any specific shape, and a variety of shapes such as rectangular (square), round, elliptical, and the like can be assumed for a shape viewed from above or below thereof. In the article, as shown in FIG. 2, the uppermost layer 5₁ and a lowermost layer 5ₙ are layers (also referred to as usual layers hereinafter) composed of a non-colored resin, and a plurality of layers laminated between the uppermost layer 5₁ and lowermost layer 5ₙ are layers (also referred to as colored layers hereinafter) 5₂ to 5ₙ₋₁ composed of the resin colored in various colors.

Both usual layers 5₁, 5ₙ are provided to prevent a decrease in strength of the final cured article. The usual layers 5₁, 5ₙ are formed only by a curing process (the process in which a non-cured resin, that is, a liquid-phase resin is cured by illumination with laser light) and have a respective prescribed thickness.

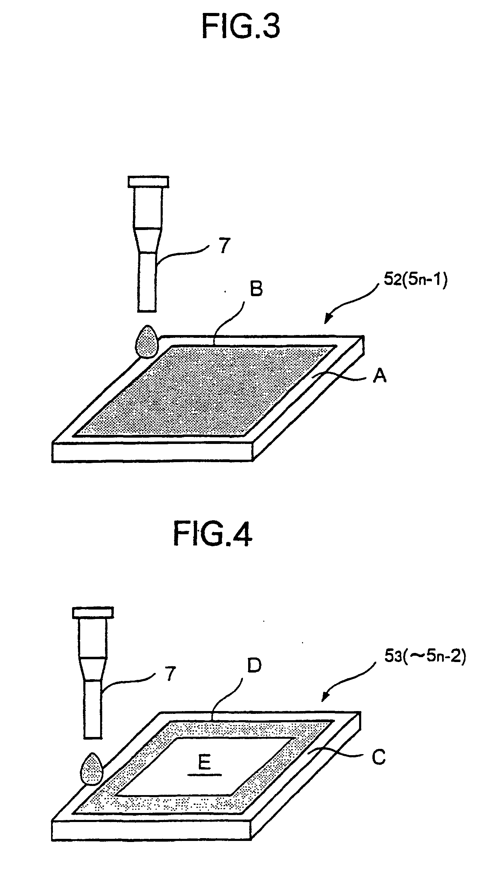

FIG. 3 is a perspective view illustrating a layer which is used as a colored layer 5₂ positioned in the uppermost portion and a colored layer 5ₙ₋₁ positioned in the lowermost portion of the colored layers 5₂ to 5ₙ₋₁ shown in FIG. 2. Note that the fact that Fig. 3 applies to both the layer 5₂ and the layer 5ₙ₋₁ is indicated in the drawing by using a reference sign "5₂(5ₙ₋₁)". The same principle is used mutatis mutandis in other drawings, I.e., "5₃( 5ₙ₋₂)" in Fig. 4 means that Fig. 4 illustrates an arbitrary one of the layers 5₃ to 5ₙ₋₂ that are shown in Fig. 2.

Turning back to Fig. 3, each of the colored layers 5₂, 5ₙ₋₁ is formed so that the colors can be recognized from the upper and lower surfaces of the article, and each of these layers comprises a non-colored region A, called an outer frame (external wall), and a colored region B formed in a so-called pool region surrounded by the external wall. The non-colored region A is formed only by the above-described curing process, similarly to the usual layers (5₁, 5ₙ).

On the other hand, the colored region B is formed by implementing a coloring process in which the non-cured state (that is, the liquid-phase state) is maintained, i.e., without irradiation with the laser beam, during curing of the non-colored region A and a colorant is added to the region that has been maintained in the non-cured state, and then by implementing a curing process similar to the above-described process on this region. Curing this region of a respective layer after colorating it while it is still in the non-cured state, is implemented to prevent a negative effect from the formation of the next layer on the respective layer. Furthermore, coloration, for example, with a color ink, of the region in the non-cured state is conducted, for example, by dropping a color ink onto the region in the non-cured state from a nozzle of a dispenser which is an addition mechanism attached to the front end of a two-axis (XY) robot arm (not shown in the figure).

FIG. 4 is a perspective view illustrating an arbitrary one of the colored layers 5₃ to 5ₙ₋₂, i.e., of all remaining layers that are sandwiched between the colored layers 5₂, 5ₙ₋₁ described above.

The colored layers 5₃ to 5ₙ₋₂ are employed for the purpose that the applied colors be visible from the side surface of the article, each of them having an outer-contour non-colored region C, called an external wall, a colored region D formed in a region called a groove of a prescribed width that is formed over the entire perimeter along the inner side of the external wall, and an inner-contour non-colored region E inside the groove. The outer-contour and inner-contour non-colored regions (C, E) are both formed by a curing process similar to that used to form the above-described usual layers (5₁, 5ₙ).

On the other hand, the colored region D, similarly to the colored region B in layers (5₂, 5ₙ₋₁) shown in FIG. 3 is formed by maintaining the non-cured state, i.e., without irradiation with the laser light, during curing of the outer-contour and inner-contour non-colored regions (C, E) and implementing a coloring process in the region that has been maintained in the non-cured state, and then implementing the curing process for this region (processing creating no obstacles for the formation of the next layer). Furthermore, coloration, for example, with a color ink, of the region in the non-cured state is conducted by dropping the color ink onto the region from a nozzle of a dispenser similar to the above-described dispenser.

The article of the above-described configuration can be fabricated by the following process.

First, a layer of non-colored resin in a non-cured state (liquid-phase state) is irradiated with a laser beam. As a result, the resin is cured and a usual layer is formed as a lowermost layer 5ₙ. Then, the liquid-phase resin for the next layer is coated to the prescribed thickness on the upper surface of the lowermost layer 5ₙ, and is subsequently cured by irradiation with a laser beam only in the region corresponding to the external wall of the liquid-phase resin thereby forming the non-colored region A of layer 5ₙ₋₁. As a result, the liquid-phase resin coated on the upper surface of lowermost layer 5ₙ is separated into the cured non-colored region A and a pool which is still in a non-cured state (liquid-phase state), that is, the region to become colored region B, which is cured after coloration by coating with a color ink. This pool is set to have the size (dimensions), and shape such as to produce no effect on the lamination and shaping of the article.

Upon such a separation of the liquid-phase resin into the cured non-colored region A and the pool in a non-cured state, a color ink is dropped as a colorant from the nozzle of the above-mentioned dispenser. It is preferred that the color ink used has a very good affinity with the liquid-phase resin. In the present embodiment, inks of four colors, red, blue, yellow, and black, are used as the color ink.

When the color ink is dropped onto the pool, because of the above-mentioned affinity it diffuses into the resin. As a result, the color ink is added to the entire pool. Once the color ink has been added to the resin in the pool, the pool is irradiated with a laser beam and cured to the same hardness as the aforesaid non-colored region A thereby obtaining the colored region B. As a result, a block-like coating film having a constant thickness is produced from the surface-like coating film formed by the color ink that is applied on the pool.

Irradiation with a laser beam of the same energy as that used for curing of the non-colored region A is sometimes insufficient to cure the above-mentioned region (pool) of the resin having the color ink added thereto, to the same hardness as that of the non-cured region A. In such a case, it is necessary to use a special curing method, for example, a method of setting a long exposure time during laser beam irradiation or a method of multiple exposure during laser beam irradiation as means for increasing the light energy projected on the region which is to become the colored region B.

Forming the colored region B by curing the region in a liquid-phase state which has a color ink added thereto makes it possible to form, without obstacles, the next layer (that is, colored layer 5ₙ₋₂) on the upper surface of colored layer 5ₙ₋₁.

Then, resin for the next layer 5ₙ₋₂ (see Fig. 2) is added to the prescribed thickness onto the upper surface of colored layer 5ₙ₋₁, and the regions C and E of layer 5ₙ₋₂ are cured by irradiation with a laser beam. As a result, the resin coated on the upper surface of colored layer 5ₙ₋₁ is separated into the cured non-colored regions C, E and a groove in a non-cured state, that is, a region which is to become the above-described colored region D. The groove, similarly to the above-described pool, is set to have a size (dimensions), and shape such as to produce no effect on the lamination and shaping of the article.

Once the resin has thus been separated into the cured non-colored regions C, E and the groove within which the resin is still in a non-cured state, a color ink having a very good affinity with the resin, as in the above-described process, is dropped as a colorant from the nozzle of the dispenser. Therefore, because of the affinity, the color ink diffuses into the resin which is in a non-cured state. As a result, the color ink is added to the entire groove. After such an addition of the color ink to the resin (that is, the groove), the groove is irradiated with a laser beam and the region that is to become the colored region D is cured to the same hardness as that of the non-colored regions C, E. As a result, a block-like coating film with a constant thickness is produced from the surface-like coating film formed by the color ink coated on the groove. Similarly to the above-described process, when the region which is to become the colored region D is cured, the irradiation with a laser beam of the same energy as that used for curing of the non-colored regions C, E is sometimes insufficient to obtain the same hardness as that of non-colored regions C, E.

In such a case, in the laser beam irradiation of the region which is to become the colored region D, it is also necessary to increase the light energy projected onto this region by using a special curing method, for example, a method of setting a long exposure time or a method of multiple exposure, similarly to the above-described laser beam irradiation of the region which is to become the colored region B.

Thus, forming the colored region D by curing the region in a liquid-phase state which has a color ink added thereto makes it possible to form, without obstacles, the next layer on the upper surface of colored layer 5ₙ₋₂.

It is sufficient that only two patterns, a pool and a groove, be used as the patterns of the colored regions in the colored layers 5₂ to 5ₙ₋₁. If the region of the liquid-phase resin to which color is added is set to have a pool-like shape, the color can be reliably recognized even when the final article is viewed from the top-bottom direction. On the other hand, when the region of the liquid-phase state resin to which color is added is set to have a groove-like shape, the color can be recognized only when the final article is viewed from the lateral direction. However, the advantage of such a setting is that the time required for the coloration process can be shortened and the amount of ink used in the coloration process can be reduced.

Once the colored layers 5ₙ₋₂ to 5₃ have been formed by the repetition of the above-described process, a colored layer 5₂ having the same configuration as the above-described colored layer 5ₙ₋₁ is formed on the upper surface of colored layer 5₃ and then a non-colored layer 5₁ having the same configuration as the non-colored layer 5ₙ is formed on the upper surface of colored layer 5₂, thereby forming the article.

The addition of the above-described resin (liquid resin) is conducted with a recoater (not shown in the figures) provided in a shaping apparatus (not shown in the figures) used for lamination and shaping of the article. Furthermore, connection between the nozzle of the dispenser and a syringe (tank) is provided with a tube.

Furthermore, a controller (not shown in the figures) controlling the units of the shaping apparatus contains shaping data used when the usual layers (5₁, 5ₙ) are formed, shaping data used when the colored layers (5₂, 5ₙ₋₁) are formed, and shaping data used when the colored layers (5₃ to 5ₙ₋₂) are formed. The controller provides for lamination and shaping of the above-mentioned article by appropriately using a variety of the shaping data.

In the above-described embodiment, a colorant is added to the layers (5₂ to 5ₙ₋₁), which are to be colored, in the process of lamination and shaping of the article. Therefore, a process for adding the colorant after the completion of the series of shaping operations is unnecessary.

Furthermore, since the colorant is added in the course of lamination and shaping process, the automation of the colorant addition operation can be conducted together with the automation of the shaping operation carried out with the shaping apparatus. Therefore, the addition operation can be conducted while the shaping operation is being conducted, and not only single-color, but also multicolor addition can be conducted.

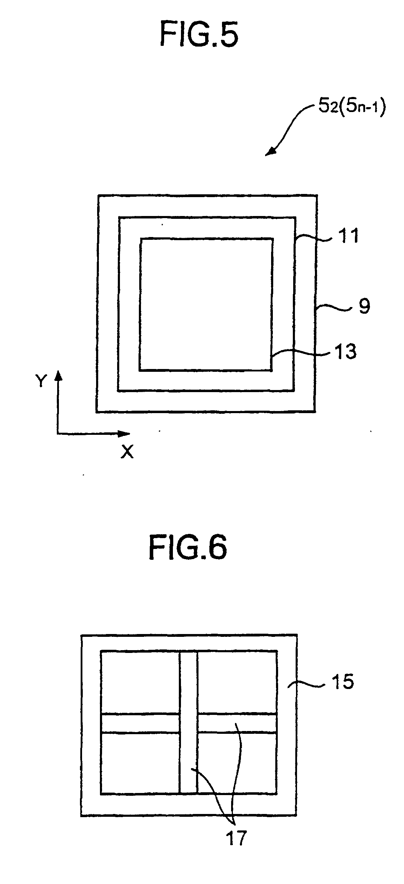

FIG. 5 illustrates an example of a method for forming a colored layer consisting of a colored resin as described with reference to FIG. 3.

In FIG. 5, the external wall front surface 9 of each of the above-described colored layers (5₂, 5ₙ₋₁) is defined based on the data (front surface data) representing the external wall front surface 9 determined by slicing the STL data i.e., three dimensional modeling data in Stereo Lithography (STL) format). Furthermore, the external wall inner surface 11 of each of the colored layers (5₂, 5ₙ₋₁) is defined based on the data (inner surface data) determined by offsetting the above-mentioned front surface data inward by a certain distance. The external wall inner surface 11 is the same as the outer periphery of the pool, that is, the region which is to become the colored region B. Furthermore, a rectangular line 13 indicating the trajectory of the position of color ink, that is, the colorant, dropping on the region which is to become the colored region B is determined based on the data (data for ink dropping) found by offsetting the inner surface data inward through a certain distance.

When the colored layers (5₃ to 5ₙ₋₂) shown in FIG. 4 are formed, the external wall front surface 9 is formed based on the front surface data, the outer periphery of the groove, that is, the region which is to become the colored region D, is determined based on the external wall inner surface 11, and the inner periphery 13 of the region which is to become the colored region D is determined based on the data found by offsetting the external wall inner surface data inward by a certain distance.

Trial fabrication of colored layers (5₂, 5ₙ₋₁) shown in FIG. 3 and colored layers (5₃ to 5ₙ₋₂) shown in FIG. 4 conducted by the inventors demonstrated that the appropriate thickness of the external wall produced for setting the pool (or groove) is about 0.5-5.0 mm. If the wall thickness is less than 0.5-5 mm, the color ink drop-wise added into the pool (or groove) will ooze out of the pool (groove), and when the wall thickness is greater than the above value, the coloration of the completed article becomes indistinct.

Furthermore, the rectangular line 13 representing the trajectory of the color ink dropping position is preferably set in a position at a distance of about 1.0 to 5.0 mm from the external wall inner surface 11, though the diffusion surface area may vary depending on the shape of the formed article and the relationship between the surface tension of the colored ink which is drop-wise added and the resin in a liquid-phase state.

The composition prepared by dissolving a powder consisting of colorless particles of a very small diameter which are characterized by the ability to be colored under UV irradiation in a resin was used as a dye (color ink) for coloration employed for the test. Since the particles were colorless, they produced no adverse effect on the UV transmissivity in the resin even after they were drop-wise added to the resin in a liquid-phase state. Accordingly, they did not hinder the curing process.

FIG. 6 illustrates a modification of the formation method described with reference to FIG. 5

In this modification, in order to prevent the color ink coated on a portion of the above-described pool region, that is, a portion of the region which is to become the colored region B of the colored layers (5₂, 5ₙ₋₁) shown in FIG. 3, from flowing out or diffusing from this region into other regions, a wall 15 is provided on the outer periphery of this region. Furthermore, partition walls 17 are also provided to prevent mixing of color inks of different colors when multicolor addition is conducted on a portion of this region.

The appropriate thickness of walls 15, 17 is about 0.5-5.0 mm, though it depends on the shape of the region. The wall thickness may be decreased to facilitate the observation of color provided to a resin in a liquid-phase state. However, if the wall thickness is less than 0.5 to 5.0 mm, there is a possibility that the color ink drop-wise added to the region will ooze out of the region.

The STL data format is employed in the controller (not shown in the figures) of the shaping apparatus in order to implement the formation method shown in FIG. 6. The STL format by itself has no color information. For this reason, files for each color are created in the controller and identification of various colors is executed.

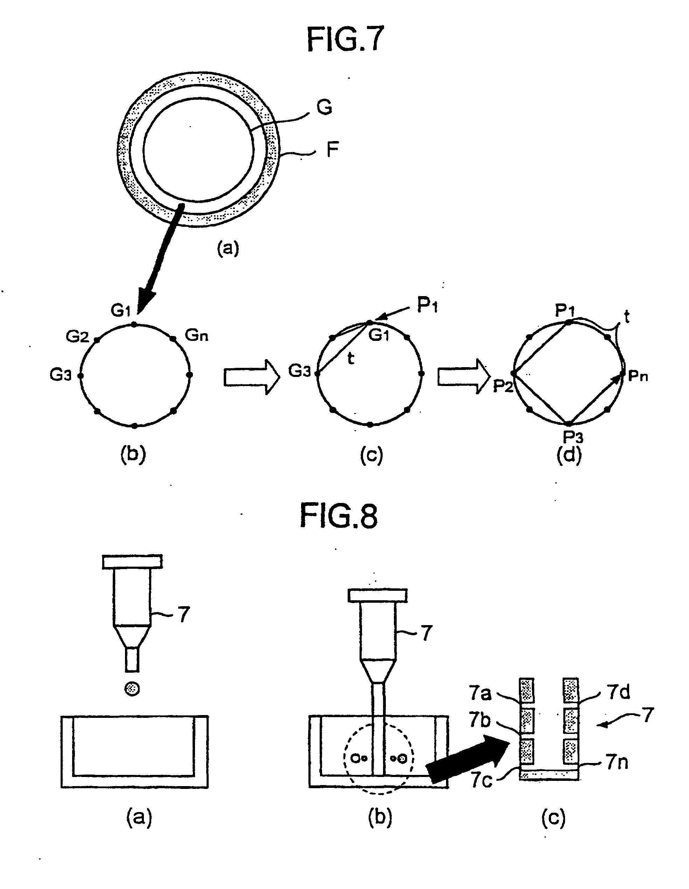

FIG. 7 illustrates an example of a method for coloring a layer consisting of a curable resin, while suppressing the build-up of the colorant (color ink).

As described above, the color ink dropped onto the resin in a liquid-phase state diffuses over the resin liquid surface. Therefore, data (coloration data) used to cause the adhesion of color ink to the resin should not be as specific as data (shaping data) used when the resin layers in a liquid-phase state are laminated and shaped. If the coloration data are too specific, the amount of added color ink is increased accordingly and the added color ink builds up in the pool region in the colored layers (5₂, 5ₙ₋₁) shown in FIG. 3 or in the groove region in the colored layers (5₃ to 5ₙ₋₂) shown in FIG. 4, thereby hindering the above-mentioned lamination and shaping. In order to guard against such a possibility, the so-called thinning of coloration data was conducted. In FIG. 7, in order to simplify the explanation and graphic representation, the lamination and shaping process is illustrated based on an article of round shape, as viewed from the upper/lower surface.

In FIG. 7(a), the ring region F shows an external wall which is formed according to shaping data for shaping a colored layer having a disk-like shape. The concentric circle G positioned within the inner periphery of that region F represents the original coloration data produced by offsetting the inner periphery of the region F inward by a certain distance, that is, the trajectory of the nozzle of the above-mentioned dispenser. The so called thinning of coloration data is conducted according to the below-described procedure by using this circle G.

First, as shown in FIG. 7(b), a plurality of equidistant points G₁ to Gₙ are determined on the circle G defined by the coloration data. More specifically, the points G₁ to Gₙ are determined by finding the coordinates indicating the points G₁ to Gₙ. Then, as shown in FIGS. 7(c) and (d), for example, a point G₁ selected from the points G₁ to Gₙ is determined as an initial point P₁ of coloration data and the point G₃ separated from this initial point P₁ by a distance of no less than a prescribed distance t is assumed to be a second point P₂ of coloration data, following the initial point P₁. By the same procedure, as shown in FIG. 7(d), the third point P₃ of coloration data, and n-th point of coloration data, that is, the final point Pₙ is found. The final point Pₙ should be selected so as to be separated from the initial point P₁ by a distance of no less than the aforesaid distance t. Respective prescribed amounts of the colorants are added at the points P₁, P₂, P₃ ..., Pₙ that were thus selected.

FIG. 8 illustrates another example of the coloration method described with reference to FIG. 7.

As described above, when a resin in a liquid-phase state is coated, there is a possibility that color ink would not diffuse uniformly in the coloration region and coloration defects can be produced. Accordingly, the below-described measures were taken to prevent such defects.

Initially, as shown in FIG. 8(a), the color ink was dropped from the nozzle 7 of a dispenser (not shown in the figures) located at a height of 5 to 10 mm above the surface of the resin in a liquid-phase state. However, modifying the structure of nozzle 7 so as to obtain a sufficient strength and a shape allowing for insertion into the liquid resin and removal therefrom makes it possible to conduct coloration by inserting the nozzle 7 into the resin, as shown in FIG. 8(b). Inserting the nozzle 7 into the resin allows for coloration in a state in which the color ink is greatly diffused. Furthermore, spattering of ink is also prevented and accurate control of the vertical position of nozzle 7 becomes unnecessary. Moreover, if a nozzle with a plurality of transverse holes 7a to 7n in a side surface, which is shown in FIG. 8(c), is used as the nozzle 7, the coloration can be conducted in a state in which the color ink is diffused even more significantly.

With another method for uniformly diffusing the color ink added to the liquid resin in the coloration region, the color ink is dropped after being heated inside the dispenser or in the nozzle 7. If a color ink is at a low temperature, the viscosity thereof is higher. As a result, the diffusion thereof requires certain time. Therefore, the color ink added to the non-cured portions of the resin, such as the above-described pool or groove, does not diffuse uniformly and coloration defects are produced. However, if the color ink is dropped after having been heated, because the viscosity is low, the ink diffuses within a comparatively short time. As a result, the coloration defects are prevented. Furthermore, the internal structure of nozzle 7 can be modified to provide for more uniform diffusion of color ink and more effective elimination of coloration defects. Thus, a structure may be used in which longitudinal holes opened in the bottom portion of nozzle 7 are provided in addition to transverse holes 7a to 7n shown in FIG. 8(c).

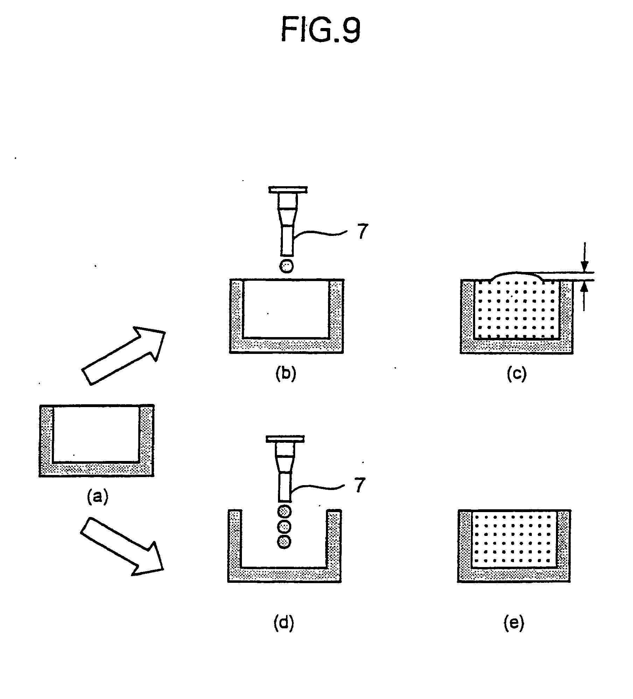

**FIG. 9** shows still another example of the coloration method illustrated by FIG. 7 and compares the results obtained by the coloration methods illustrated by FIG. 7 and FIG. 8.

With the coloration methods illustrated by FIG. 7 and FIG. 8, first, as shown in FIG. 9(a) only the external wall is cured and the region corresponding to the pool (or groove) is left in a liquid-phase state. Then, as shown in FIG. 9(b), a color ink is dropped from the nozzle 7 of a dispenser into the pool (or groove) region which is in a non-cured state. As a result, as shown in FIG. 9(c), a build-up of an amount of the dropped color ink appeared in the pool (or groove) region, and shaping of the next layer on the upper surface of the layer shown in the figure was impossible at a lamination pitch with a thickness of no more than the build-up. In other words, a small lamination pitch could not be set.

Accordingly, in the present example, as shown in FIG. 9(a), only the external wall is cured and the region corresponding to the pool (or groove) is left in a liquid-phase state. Then, as shown in FIG. 9(d), the resin in a liquid-phase state located in the region corresponding to the pool (or groove) is sucked out and a color ink is dropped from the nozzle 7. With such a method, since the resin (in a liquid-phase state) located in the region corresponding to the pool (or groove) is removed prior to dropping the ink, no build-up is caused by the color ink dropping, as shown in FIG. 9(e), which illustrates the state after the resin has brought back.

A method of applying air pressure to the dropping site of color ink is still another means for preventing the build-up of color ink dropped on the non-cured resin. Furthermore, a method of applying vibrations to the dropping site of color ink is a means for preventing the build-up of the color ink and also enhancing the diffusion thereof.

For example, compositions prepared by admixing pigments, dyes, or inks prepared by using them as raw material to the resin in a liquid-phase state, and compositions prepared by dissolving pigments or dyes in solvents other than resins in a liquid-phase state can be used as the above-mentioned color ink. As for the compositions prepared by dissolving pigments or dyes in solvents other than resins in a liquid-phase state, they should have affinity with the resin, in other words, they should not hinder the curing of the resin. Moreover, compositions using fibers or color beads instead of pigments and dyes can be also used as the color ink.

The explanation given above was based on the assumption that an external wall surrounding the pool (or groove) region is present. However, a shaping method which requires no external wall can be also implemented by adding a color ink to a non-cured resin in a plurality of cycles. Such a shaping method comprises the following steps.

First, only one layer of a resin layer is cured and a thin film is formed by irradiating the resin in a liquid-phase state with a laser beam. Then a color ink is added on the thin film according to the offset data (data obtained by offsetting the contour shape data inward by about 0.5 to 5.0 mm) of shaping data (data representing the contour shape of the article) of the article. When the colored surface is the upper surface or lower surface of the layer, the color ink is added inside the contour line determined by the data obtained by offsetting the contour data of the upper surface or lower surface inward. When the build-up of the color ink thus added is small, the addition of color ink is repeated multiple times and the build-up mound of the added color ink is formed within a range in which the prescribed lamination pitch is not reached. Further, in a state in which build-up mound the added color ink is sufficiently dried (cured) to a degree producing no adverse effect on the next operation, resin in a liquid-phase state is added onto the build-up mound of the color ink, this resin being required for forming the next layer. Then, the resin in a liquid-phase state is irradiated with a laser beam according to the shape data of the next layer and the resin is cured so as to obtain the prescribed shape.

The desired article is formed by repeating the above-described process the required number of times.

With this method, the build-up with a prescribed thickness is formed from a color ink by multiple addition of the color ink. However, instead of adding the color ink, a color sheet having a thickness that does not exceed the lamination pitch may be cut to the desired shape and then glued to the liquid-phase resin. In such a case, a color sheet having a thickness that does not exceed the lamination pitch may be cut to the desired shape after gluing to the liquid-phase resin. A color sheet having a thickness exceeding the lamination pitch is preferably not used because it hinders lamination and shaping.

Furthermore, a method of adding a viscous color ink, for example a color resin only one time can be used instead of the method of multiple addition of color ink. With such a method, the addition of color resin is conducted while the thickness of a coating film formed by adding the color resin is being controlled so that it approaches as close as possible to the thickness of the lamination pitch.

Furthermore, a method in which a color ink is dropped onto a liquid-phase resin and the liquid-phase resin is cured faster than the dropped color ink diffuses into the resin can be used as a shaping method that does not require the formation of the above-mentioned external wall. In other words, with such a method the outflow of color ink into a region which is not to be colored is prevented by conducting dropping of color ink and curing of the liquid-phase resin practically at the same time.

Moreover, if the color ink is in a state in which it does not diffuse in the resin, for example, when the particles of color ink are embedded in a resin, the desired article can be formed by adding (printing) a color ink to the resin (that is, a liquid-phase resin), for example, by using a mechanism similar to that of ink-jet printers and then repeating the process of curing the resin for each layer.

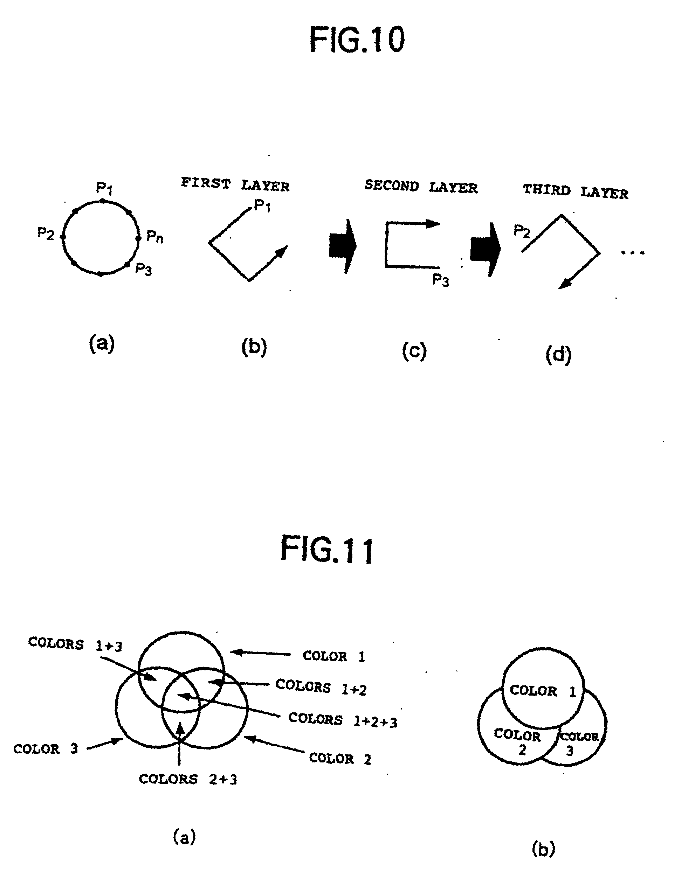

FIG. 10 illustrates an example of a method by which coloration in the layers of an article consisting of a photo-curable resin in a state in which the coloration region is averaged over the entire body, based on the method illustrated by FIG. 7.

In this example, coloration was conducted by using thinning of coloration data in which the initial points were randomly made different for all of the layers, so that of the points P₁ to Pₙ (FIG. 10(a)) located on a circle and obtained by the method illustrated by FIG. 7, the thinning coloration data having the point P₁ as the initial point were used for the first layer (FIG. 10(b)), the thinning coloration data having the point P₃ as the initial point were used for the second layer (FIG. 10(c)), and the thinning coloration data having the point P₂ as the initial point were used for the third layer (FIG. 10(d)).

Accordingly, based on those coloration data, the colorant (color ink) addition regions are shifted in each of the layers with respect to the other layers and, as a result, the colorant addition regions are averaged and dispersed, as viewed over the entire article.

FIG. 11 illustrates an example of a method for multicolor coloration of a layer consisting of a curable resin, without decreasing the size of coloration region.

in case of multicolor coloration of an article, unless the priority of colors in coloration is determined in advance, a region in which coloration is conducted with a color other than the color relating to coloration data will expand, as shown in FIG. 11(a). In the example shown in FIG. 11(a), though the colors of coloration data are color 1, color 2, and color 3, actually, a portion in which the coloration region of color 1 and the coloration region of color 2 overlap, a portion in which the coloration region of color 1 and the coloration region of color 3 overlap, a portion in which the coloration region of color 2 and the coloration region of color 3 overlap, and a portion in which the coloration regions of color 1, color 2, and color 3 overlap expand correspondingly. Sometimes coloration is not actually conducted in the above-mentioned overlapping regions and partitions are provided between various coloration regions. In such a case, the partitioned regions assume an appropriate size, as compared to the coloration region. As a result, the coloration regions are reduced in size.

In the present example, a priority of colors was established during coloration. The priority can be freely determined depending on what color of the article should be conspicuous, in user's opinion. For example, if among the above-mentioned color 1, color 2, and color 3, color 1 should be the most conspicuous, followed by color 2, then coloration with the above-mentioned color separation is conducted according to the pattern shown in FIG. 11(b). As a result, the reduction of coloration regions in size caused by the multicolor addition can be prevented.

## Claims

1. A process for producing a colored shaped article by laminating a plurality of layers (5₁ - 5ₙ), one upon the other, each layer being formed by
a) providing a layer of a curable resin in liquid state, and
b) irradiating the resin with laser light to cure the resin of and shape the respective layer,
**characterized in that**
step b) comprises for at least one of said layers
d1) irradiating and curing the resin of the respective layer only in a predetermined first region (A; C), which surrounds a second region,
d2) adding a colorant to the non-cured resin in the second region (B; D) of said respective layer, and
d3) then irradiating and curing the resin in said second region (B; D),
wherein said first region (A; C) surrounds said second region.

2. The process of claim 1, wherein step d1) comprises irradiating and curing the resin of the respective layer only in said predetermined first region (C) and a predetermined third region (E), the third region being surrounded by said second region.

3. The process of claim 1 or 2, wherein step d2) comprises immersing part of a needle-like dispenser tip (7) into said non-cured resin and introducing the colorant through holes provided in the immersed part of the dispenser tip.

4. A shaping apparatus for producing a colored shaped article comprising:
a recoater for providing layers of a curable resin in liquid state, one after the other, and
irradiation means for irradiating the resin of a respective layer with laser light to cure the resin of and shape the respective layer before the next layer is provided by said recoater,
**characterized in that**
said irradiation means is adapted to irradiate and cure the resin of the respective layer only in a predetermined first region (A; C), which surrounds a second region (B; D),
a dispenser is provided to add a colorant to the non-cured resin in said second region (B; D) of said respective layer after the first region has been cured by said irradiation means, and
said irradiation means is adapted to irradiate and cure the resin in said second region (B; D) after the colorant has been added by said dispenser.

5. The apparatus of claim 4, wherein said irradiation means is adapted to irradiate and cure the resin of the respective layer only in said predetermined first region (C) and a predetermined third region (E), the third region being surrounded by said second region (D).

6. The apparatus of claim 4 or 5, wherein said dispenser comprises a needle-like dispenser tip (7) adapted to be immersed into said non-cured resin and to introduce the colorant through holes provided in the immersed part of the dispenser tip (7).

## Patentansprüche

1. Verfahren zur Herstellung eines gefärbten Formkörpers durch Laminieren einer Mehrzahl von Schichten (5₁-5ₙ) übereinander, wobei jede Schicht gebildet wird durch
(a) Bereitstellen einer Schicht eines härtbaren Harzes in flüssigem Zustand und
(b) Bestrahlen des Harzes mit Laserlicht, um das Harz der jeweiligen Schicht zu härten und diese zu formen,
**dadurch gekennzeichnet, dass**
die Stufe b) für mindestens eine der Schichten folgendes umfasst:
d1) Bestrahlen und Härten des Harzes der jeweiligen Schicht nur in einem vorbestimmten ersten Bereich (A; C), der einen zweiten Bereich umgibt,
d2) Zugeben eines farbgebenden Mittels zum ungehärteten Harz im zweiten Bereich (B; D) der jeweiligen Schicht und
d3) anschließend Bestrahlen und Härten des Harzes im zweiten Bereich (B; D), wobei der erste Bereich (A; C) diesen zweiten Bereich umgibt.

2. Verfahren nach Anspruch 1, wobei die Stufe d1) das Bestrahlen und Härten des Harzes der jeweiligen Schicht nur im vorbestimmten ersten Bereich (C) und einem vorbestimmten dritten Bereich (E) umfasst, wobei der dritte Bereich vom zweiten Bereich umgeben ist.

3. Verfahren nach Anspruch 1 oder 2, wobei die Stufe d2) das Eintauchen eines Teils einer nadelartigen Abgabespitze (7) in das ungehärtete Harz und das Einführen des farbgebenden Mittels durch Löcher, die im eingetauchten Teil der Abgabespitze vorgesehen sind, umfasst.

4. Formgebungsvorrichtung zur Herstellung eines gefärbten Formkörpers, umfassend:
eine Wiederbeschichtungsvorrichtung, mit der Schichten eines härtbaren Harzes in flüssigem Zustand nacheinander gebildet werden, und
eine Bestrahlungseinrichtung zum Bestrahlen des Harzes einer jeweiligen Schicht mit Laserlicht zum Härten des Harzes der jeweiligen Schicht und zum Formen derselben, bevor die nächste Schicht mit der Wiederbeschichtungsvorrichtung bereitgestellt wird,
**dadurch gekennzeichnet, dass**
die Bestrahlungseinrichtung beschaffen ist, das Harz der jeweiligen Schicht nur in einem vorbestimmten ersten Bereich (A; C), der einen zweiten Bereich (B; D) umgibt, zu bestrahlen und zu härten,
eine Abgabevorrichtung vorgesehen ist, um ein farbgebendes Mittel dem ungehärteten Harz im zweiten Bereich (B; D) der jeweiligen Schicht zuzusetzen, nachdem der erste Bereich mit der Bestrahlungseinrichtung gehärtet worden ist, und
die Bestrahlungseinrichtung beschaffen ist, das Harz im zweiten Bereich (B: D) zu bestrahlen und zu härten, nachdem das farbgebende Mittel mit der Abgabevorrichtung zugesetzt worden ist.

5. Vorrichtung nach Anspruch 4, bei der die Bestrahlungseinrichtung beschaffen ist, das Harz der jeweiligen Schicht nur im vorbestimmten ersten Bereich (C) und in einem vorbestimmten dritten Bereich (E) zu bestrahlen und zu härten, wobei der dritte Bereich vom zweiten Bereich (D) umgeben ist.

6. Vorrichtung nach Anspruch 4 oder 5, wobei die Abgabeeinrichtung eine nadelartige Abgabespitze (7) umfasst, die beschaffen ist, in das ungehärtete Harz einzutauchen und das farbgebende Mittel durch Löcher, die im eingetauchten Teil der Abgabespitze (7) vorgesehen sind, einzuführen.

## Revendications

1. Procédé pour produire un article formé coloré par lamination d'une pluralité de couches (5₁ - 5ₙ), les unes au-dessus des autres, chaque couche étant formée par le fait de :
a) prendre une couche d'une résine durcissable à l'état liquide, et
b) exposer la résine à la lumière laser pour durcir la résine et former la couche respective,
**caractérisé en ce que**
l'étape b) comporte pour au moins l'une des couches les étapes qui consistent
d1) à exposer et durcir la résine de la couche respective uniquement dans une première région (A ; C) déterminée à l'avance qui entoure une deuxième région,
d2) à ajouter un colorant à la résine non durcie dans la deuxième région (B ; D) de la couche respective, et
d3) exposer ensuite et durcir la résine dans la deuxième région (B ; D),
la première région (A ; C) entourant la deuxième région.

2. Procédé suivant la revendication 1, dans lequel l'étape d1) comporte les étapes qui consistent à exposer et durcir la résine de la couche respective uniquement dans la première région (C) déterminée à l'avance et une troisième région (E) déterminée à l'avance, la troisième région étant entourée par la deuxième région.

3. Procédé suivant la revendication 1 ou 2, dans lequel l'étape d2) comporte les étapes qui consistent à immerger une partie d'une pointe (7) de dispensation en forme d'aiguille dans la résine non durcie et à introduire le colorant par des trous prévus dans la partie immergée de la pointe de dispensation.

4. Dispositif de formation pour produire un article formé coloré comportant :
un dispositif d'application à nouveau d'un revêtement pour fournir des couches d'une résine durcissable à l'état liquide, l'une après l'autre, et des moyens d'exposition pour exposer la résine d'une couche respective à de la lumière laser pour durcir la résine et former la couche respective avant que la couche suivante ne soit fournie par le dispositif d'application à nouveau d'un revêtement, **caractérisé en ce que**
les moyens d'exposition sont conçus pour exposer et durcir la résine de la couche respective uniquement dans une première région (A ; C) déterminée à l'avance, qui entoure une deuxième région (B ; D),
un dispensateur est prévu pour ajouter un colorant à la résine non durcie dans la deuxième région (B ; D) de la couche respective après que la première région a été durcie par les moyens d'exposition, et
les moyens d'exposition sont conçus pour exposer et durcir la résine dans la deuxième région (B ; D) après que le colorant a été ajouté par le dispensateur.

5. Dispositif suivant la revendication 4, dans lequel les moyens d'exposition sont conçus pour exposer et durcir la résine de la couche respective uniquement dans la première région (C) déterminée à l'avance et une troisième région (E) déterminée à l'avance, la troisième région étant entourée par la deuxième région (D).

6. Dispositif suivant la revendication 4 ou 5, dans lequel le dispensateur comporte une pointe (7) de dispensation en forme d'aiguille conçue pour être immergée dans la résine non durcie et pour introduire le colorant par des trous disposés dans la partie immergée de la pointe (7) de dispensation.
